Europäisches Patentamt

(19) European Patent Office

Office européen des brevets

(11) Publication number: **0 016 560**

**A1**

(12) **EUROPEAN PATENT APPLICATION**

(21) Application number: **80300583.4**

(22) Date of filing: **27.02.80**

(51) Int. Cl.³: **G 11 B 5/09**
**G 11 B 27/02**

(30) Priority: **05.03.79 GB 7907752**
**10.04.79 GB 7912586**

(43) Date of publication of application:
**01.10.80 Bulletin 80/20**

(84) Designated Contracting States:
**AT DE FR NL**

(71) Applicant: **THE DECCA RECORD COMPANY LIMITED**
**Decca House 9 Albert Embankment**
**London SE1 7SW(GB)**

(72) Inventor: **Griffiths, Frank Anthony**
**105 Hillcroft Crescent**
**Oxhey, Hertfordshire(GB)**

(74) Representative: **Horton, Andrew Robert Grant et al,**
**BOULT, WADE & TENNANT 27 Furnival Street**
**London, EC4A 1PQ(GB)**

(54) **Editing of programmes and other signals in digitally coded form.**

(57) A method of editing signals such as audio frequency signals representing musical or like programmes includes representing the signal which is to be edited and another signal which is to supersede part of the first signal in similar digitally coded forms comprising discrete blocks of data separated by interblock spaces. A synchronous cross-fade of the signals is cued at an interblock space preceding the transition between the signals. A series of blocks of data representing the second signal subsequent to the point of cueing and encompassing the transition may be recorded in a store for the purpose and read out for the cross-fade.

EP 0 016 560 A1

./...

"EDITING OF PROGRAMMES AND OTHER SIGNALS IN

DIGITALLY CODED FORM"


This invention principally relates to the editing of musical programmes or other audio signals which are in digitally coded form but may have a more general utility.

The invention is intended to be particularly useful for the making of master recordings (usually on magnetic tape) for use in the multiple production of gramophone record discs or cassette tapes and it will be convenient to describe the invention in such a context, but the invention is not intended to be limited to such usage.

As is well known, it is frequently necessary to edit recordings of music programmes and the like in order that, for example, passages containing faults may be displaced by corresponding passages, taken from other recordings ("takes").  It has been proposed to make master recordings in which the audio frequency signals are represented in digitally coded form, such as pulse code modulation, the perspective quality of the recording being greater than if analogue signals are used throughout the recording process, but to date there has been no convenient process or apparatus for editing such a master recording.

It is known to code signals digitally in a variety of forms each of which comprises blocks of data separated by interblock spaces. Generally speaking, each block comprises a plurality of digital words; the words may be in either serial or parallel form.

The present invention provides, among other things, a method of editing an audio frequency signal, represented in a digitally coded form comprising discrete blocks of data separated by interblock spaces, by the insertion of a passage of another, similarly coded, signal, the method comprising selecting a time of transition between the two signals, recording the first signal up to an interblock space which is either selected to be or precedes the transition, and at said space cueing a synchronous crossfade of the first signal and the second signal.

In a convenient form of the invention, the second signal is replayed during a rehearsal of the first signal and a block or series of blocks following the said interblock space and either immediately following or encompassing the point of transition is read into a store, and during a second playing of the first signal the contents of the store are read out for cross-fading with the first signal.

The cross-fading is conveniently performed by a digital cross-mixer which may be controlled by a counter in respect of the beginning of the cross-fade, which may occur at or a controllable time after the interblock space which marks the cueing point, and the rate at which the cross-fade proceeds. The duration of the insertion of the second signal is preferably controlled to terminate in a reversed cross-fade with the first signal.

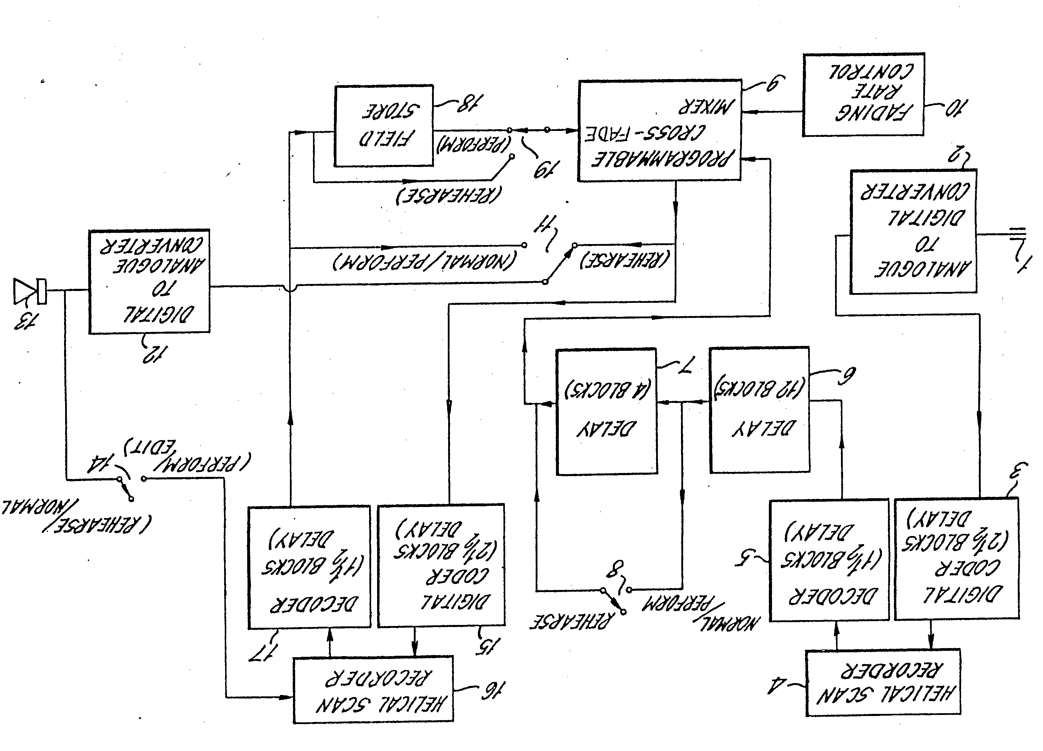

There follows a description of an apparatus suitable for performing the present invention and a method of performing it, reference hereinafter being made to the accompanying drawing.

An original signal to be edited is received at a terminal 1 and is converted into a digitally coded signal, such as a pulse code modulated signal of 16 bits at 48 kHz by an analogue-to-digital converter 2. It is then coded by a coder 3 into a signal appropriate for recording, in this particular embodiment of the invention, by a helical scan video tape recorder. During the coding process error code may be added as desired. The preferred form of recording includes non-interlaced scanning, each frame presenting frame identification information followed by sixteen blocks of coded digital information. However, many forms of coding would be suitable and need not be described here in detail.

The so-called first signal is replayed by the machine 4 and decoded in a decoder 5. Thereafter, after passing through an optional digital fader it passes through a delay 6, which provides a delay corresponding to twelve blocks of digital information, and either through a further delay 7, providing a delay of four blocks, or via a bypass switch 8 (as will be described). The output side of the delay 7 and the switch 8 are connected to one input of a known form of programmable cross-mixing fader 9 which is controlled digitally by a fading rate control 10. The output terminal of the fader 9 is connected firstly through a switch 11 to a digital-to-analogue converter 12 and a loudspeaker 13 and also to a coder 15 (corresponding to the coder 3) which feeds a helical scan recorder 16 which may be similar to the machine 4. The machine 16 is arranged to feed the signal that it records directly to the replay circuits. The replayed signals are decoded by decoder 17 to be coupled to one terminal of the switch 11 and also to the input of a field store 18, the output of which can be coupled to another input of the fader 9. The field store 18 can be bypassed according to the position of a switch 19.

It is preferable to provide a monitor recording of the output of the digital-to-analogue converter 12 and accordingly the output thereof is fed via a switch 14 to be recorded on an audio track made by the video tape recorder 16. It will be presumed in the following that the first signal is replayed from the machine 4 for "rehearsal", during which editing points are to be selected. During the rehearsal the second signal, recorded during another performance of the programme, is replayed from the second video tape machine 16 one frame (sixteen blocks) later than the first signal. During rehearsal the switch 8 interrupts the bypass of the delay 7 so that the first signal traverses that delay; the switch 11 couples the signal to the converter 12 directly; and the switch 14 inhibits the recording of the first signal by the machine 16. The second signal is replayed by the machine 16 and bypasses the field store 18.

Appropriate controls are provided for the fader 9 to mark the start of any transition between the first and second signals; the cueing point for any transition is automatically selected to be either an interblock space which is at the start of the transition or some earlier interblock space. If the latter is selected, the cross-fade programme includes an initial waiting period of at least one block's duration before the cross-fade actually commences.

The choice of an interblock space as a cueing point is beneficial because in practice the sources of the two signals may become slightly out of synchronism owing , for example, to mechanical jitter in the tape recorders and the duration of the interblock space provides sufficient time to switch a recording machine into the 'recording' mode before the next block of data commences.

It will be apparent that since the decoding delays during the rehearsal mode balance, the durations of the delay 6 and 7 must equal one frame, namely sixteen blocks.

For the perform edit mode, the switches 8, 11, 14 and 19 are moved to their respective positions such that the delay 7 is bypassed, the output of the recorder 16 is fed to the converter 12, the output of the fader 9 is fed to the recorder 16 and the field store 18 can feed the fader 9. When a cueing point is reached, the programmable cross-mixing fader 9 cross-fades the "first" signal with the stored signal, which in this embodiment is one frame (sixteen blocks) of the replay output of the second machine 16.

The cross-fade may be "linear", "S-shaped" or at any other feasible rate.

ARGH/EA/168

CLAIMS:

1. A method of editing a signal which is represented in a digitally coded form comprising discrete blocks of data separated by interblock spaces, by the insertion of a passage of another, similarly coded signal, the method comprising selecting a time of transition between the two signals, and cueing a synchronous cross-fade of the two signals at an interblock space which is either selected to be , or precedes, the transition.

2. A method according to claim 1 in which the first signal is recorded at least up to the said . interblock space.

3. A method according to claim 2 in which a block or series of blocks of the second signal following the said interblock space and encompassing the period of the intended cross-fade is read into a store and the contents of the store are read out for cross-fading with the first signal.

0016560

## DOCUMENTS CONSIDERED TO·BE RELEVANT

| Category | Citation of document with indication, where appropriate, of relevant passages | Relevant to claim |
|---|---|---|
| P | US - A - 4 145 683 (MINNESOTA MINING AND MANUFACTURING CO.) <br> * abstract * <br> -- | 1. |
| P | GB - A - 2 008 364 (SONY CORP.) <br> * page 2, lines 74 to 121 * <br> -- | 1 |
| A | US - A - 3 930 234 (SIEMENS AG) <br> * claims 1, 3, 6; abstract * <br> -- | |
| A | SMPTE JOURNAL, Vol. 87, No. 6, <br> June 1978 <br> New York <br> J. DIERMANN "Digital Videotape Recording: An Analysis of Choices" <br> pages 375 to 378 <br> * page 377, left-hand column * <br> ---- | |

**CLASSIFICATION OF THE APPLICATION (Int. Ci.²)**

G 11 B  5/09

G 11 B 27/02

**TECHNICAL FIELDS SEARCHED (Int.Cl.3)**

G 11 B  5/00

G 11 B 27/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search <br> Berlin | Date of completion of the search <br> 11-06-1980 | Examiner <br> LEITHÄUSER |
|---|---|---|

EPO Form 1503.1  06.78